# FASCICULE DE BREVET EUROPEEN

(11) **EP 0 537 328 B1**
(45) Date de publication et mention de la délivrance du brevet: **08.03.1995**
(21) Numéro de dépôt: 92910950.2
(22) Date de dépôt: 30.04.1992
(51) Int. Cl.: B01D 11/04

(54) **EXTRACTEUR CENTRIFUGE MULTI-ETAGES**
MEHRSTUFIGER ZENTRIFUGALEXTRACTOR
MULTI-STAGE CENTRIFUGAL EXTRACTION APPARATUS

(30) Priorité: 03.05.1991 FR 9105463
(43) Date de publication de la demande: 21.04.1993
(73) Titulaire: SOCIETE GENERALE POUR LES TECHNIQUES NOUVELLES S.G.N., 78182 Saint-Quentin-en-Yvelines Cédex (FR)
(72) Inventeur: DOLLFUS, Jacques, F-78690 Les-Essarts-le-Roi (FR)
(74) Mandataire: Poulin, Gérard
(86) Numéro de dépôt international: FR9200387
(87) Numéro de publication internationale: WO9219371

(56) Documents cités:
- FR-A- 1 541 754
- US-A- 2 776 193

## Description

L'invention concerne un extracteur centrifuge comprenant plusieurs étages superposés dans lesquels deux liquides normalement non missibles sont mis en présence l'un de l'autre afin d'assurer le traitement d'un premier de ces liquides par le deuxième liquide.

Il est à noter que l'un au moins des deux liquides qui sont mis en présence à l'intérieur de l'extracteur peut comporter également des particules solides en suspension.

Les extracteurs centrifuges sont des appareils qui réalisent une émulsion d'un liquide à traiter et d'un liquide de traitement normalement non missibles, afin de favoriser le traitement, puis qui assurent la séparation de ces deux liquides par centrifugation. Le liquide à traiter peut notamment être constitué par une phase aqueuse lourde alors que le liquide de traitement est une phase organique légère.

Dans la pratique, il est le plus souvent nécessaire de répéter ces deux opérations un certain nombre de fois afin d'optimiser le traitement. Pour cela, on utilise habituellement des extracteurs centrifuges à plusieurs étages superposés, dans lesquels la phase aqueuse lourde à traiter circule de haut en bas depuis l'étage supérieur vers l'étage inférieur, alors que la phase organique légère assurant le traitement circule de bas en haut depuis l'étage inférieur vers l'étage supérieur de l'appareil.

Parmi les extracteurs centrifuges à étages multiples superposés existants, on citera les modèles d'extracteurs centrifuges LX commercialisés par la Société ROBATEL SLPI. Ces extracteurs centrifuges comprennent, à l'intérieur d'une enceinte fixe, un bol apte à être entraîné en rotation à grande vitesse autour d'un axe vertical et délimitant intérieurement plusieurs compartiments de séparation superposés. Ce bol rotatif est lui-même placé coaxialement autour d'un fût tubulaire central fixe, délimitant vers l'intérieur chacun des compartiments de séparation.

Dans le fond de chacun des compartiments de séparation, le bol rotatif comporte une chambre de mélange dans laquelle pénètrent séparément la phase lourde en provenance de l'étage situé immédiatement au-dessus et la phase légère en provenance de l'étage situé immédiatement en dessous. Un disque agitateur, solidaire du fût central fixe, coopère avec les parois tournant à grande vitesse de la chambre de mélange pour réaliser une émulsion extrêmement fine des phases lourde et légère. De plus, l'ensemble constitué par la chambre de mélange, les canaux d'introduction et d'évacuation des deux phases dans et hors de cette chambre, et le disque agitateur, forment une pompe qui permet l'aspiration des deux phases à partir des étages adjacents.

Les deux phases de l'émulsion ainsi créée sont ensuite séparées par l'action de la force centrifuge dans le compartiment de séparation de l'étage correspondant. La phase relativement légère est admise dans la chambre de mélange de l'étage immédiatement supérieur par un passage situé à proximité du fût central fixe. Au contraire, la phase relativement lourde redescend vers la chambre de mélange de l'étage immédiatement inférieur par des canaux situés à la périphérie extérieure du bol rotatif.

Les extracteurs centrifuges à plusieurs étages superposés réalisés de cette manière donnent, pour l'essentiel, les résultats désirés. Ils présentent cependant deux inconvénients notables.

Un premier de ces inconvénients résulte de la circulation de la phase lourde d'un étage donné vers l'étage immédiatement inférieur par des canaux formés dans le bol rotatif, à la périphérie de celui-ci. Etant donné que le bol tourne à des vitesses très élevées qui peuvent atteindre, par exemple, environ 20 à 30 m/s, les particules solides qui sont généralement présentes dans la phase lourde ont tendance à s'agglomérer sous l'effet de la force centrifuge, ce qui conduit à des colmatages nécessitant l'arrêt de l'appareil. De plus, la forte densité des corps solides agglomérés, due à la force centrifuge, rend les opérations de décolmatage longues et difficiles.

Un second inconvénient des extracteurs centrifuges à étages multiples superposés du type décrit précédemment provient de l'air qui est présent à l'intérieur de l'appareil. Lors de la rotation du bol tournant, cet air vient se placer entre le fût central fixe et le liquide contenu dans les compartiments de séparation. Cependant, étant donné que ce liquide est lui-même entraîné en rotation à grande vitesse par le bol tournant, alors que la couche d'air qui est en contact avec le fût central est pratiquement à l'état statique, il se produit des turbulences qui se propagent de l'air dans les phases liquides contenues dans les différents compartiments de séparation. Ces turbulences perturbent l'efficacité de la séparation obtenue par centrifugation dans ces compartiments de séparation, ce qui se traduit par un abaissement du rendement de chaque étage.

Par ailleurs, on connait aussi du document FR-A-2 093 055 un extracteur centrifuge à étages multiples juxtaposés, dans lequel chacun des étages de l'extracteur comprend un carter fixe à l'intérieur duquel un bol délimitant intérieurement un compartiment de séparation est entraîné en rotation autour d'un axe vertical. La phase lourde et la phase légère sont amenées dans le fond du carter fixe, où elles sont mélangées par des palettes solidaires du bol rotatif, avant de remonter par un passage axial prévu dans le fond de ce dernier. Cette remontée est assurée grâce à un effet de pompage obtenu par la coopération d'ailettes fixes portées par une tige axiale solidaire du carter et d'ailettes tournant es montées dans le passage axial du bol rotatif traversé par cette tige. Les phases lourde et légère sont ainsi introduites dans un compartiment de séparation formé à l'intérieur du bol, de façon à être séparées par centrifugation. Des déversoirs prévus à l'extrémité supérieure du compartiment de séparation permettent d'acheminer les phases lourde et légère respectivement vers les deux étages adjacents par des canaux verticaux formés dans le carter fixe de l'étage considéré.

Cet extracteur centrifuge ne présente pas les inconvénients du précédent. En effet, l'acheminement de la phase lourde entre les étages adjacents s'effectue par gravité à l'intérieur du carter fixe, ce qui réduit considérablement les risques de colmatage et facilite le décolmatage lorsque celui-ci s'avère nécessaire.

De plus, la couche d'air contenue dans le bol rotatif est en contact avec l'arbre rotatif servant à entraîner le bol ainsi qu'avec le liquide qui est entraîné en rotation dans ce dernier. Par conséquent, les turbulences induites dans le liquide sont réduites par rapport à l'extracteur centrifuge à plusieurs étages superposés décrit précédemment. Le rendement propre de chaque étage s'en trouve sensiblement amélioré.

Cependant, l'extracteur centrifuge décrit dans le document FR-A-2 093 055 est un extracteur à plusieurs étages juxtaposés, qui nécessite un moteur séparé pour entraîner en rotation chacun des étages de l'extracteur. Cela augmente à la fois l'encombrement, le prix de revient et le coût d'exploitation de l'appareil. De plus, cela contribue à accroître les risques de pannes.

Par ailleurs, la conception de l'extracteur centrifuge décrit dans le document FR-A-2 093 055 est telle que la transposition de la solution proposée dans le cas d'un extracteur comportant plusieurs étages juxtaposés à un extracteur comportant plusieurs étages superposés est pratiquement impossible à réaliser. En particulier, le pompage du liquide mélangé, permettant de le faire remonter à l'intérieur du bol rotatif dans le compartiment de séparation, est obtenu grâce à la coopération d'ailettes fixes et tournantes formées respectivement sur une tige axiale solidaire du fond du carter fixe et dans un passage axial formé dans le bol autour de cette tige. Il est donc impossible de prolonger vers le bas l'arbre d'entraînement vertical du bol rotatif pour entraîner en rotation les bols rotatifs d'autres étages qui seraient situés en dessous du premier.

L'invention a précisément pour objet un extracteur centrifuge à plusieurs étages superposés, dont la conception originale lui permet de bénéficier des mêmes avantages que l'extracteur centrifuge à étages juxtaposés décrit dans le document FR-A-2 093 055, tout en n'ayant besoin que d'un moteur d'entraînement unique, comme les extracteurs centrifuges à plusieurs étages superposés conventionnels.

Conformément à l'invention, ce résultat est obtenu au moyen d'un extracteur centrifuge comprenant un carter fixe, un arbre vertical apte à entraîner en rotation à l'intérieur du carter un bol délimitant intérieurement un compartiment de séparation, des moyens pour mélanger et pour injecter dans le fond du compartiment de séparation une phase liquide relativement lourde et une phase liquide relativement légère, le bol comportant à son extrémité supérieure au moins un passage central de sortie de la phase relativement légère et au moins un passage périphérique de sortie de la phase relativement lourde, caractérisé par le fait que l'extracteur comprend plusieurs étages superposés, comportant chacun un bol apte à être entraîné en rotation par ledit arbre, le passage central de chaque étage étant un passage annulaire formé entre ledit arbre et une paroi tubulaire solidaire du bol de cet étage, et communiquant avec les moyens de mélange et d'injection d'un étage supérieur, alors que le passage périphérique de chaque étage débouche dans un canal de retour de la phase relativement lourde, formé dans le carter fixe et communiquant avec les moyens de mélange et d'injection d'un étage inférieur.

Avantageusement, les moyens de mélange et d'injection des phases relativement lourde et relativement légère dans chaque compartiment de séparation comprennent des conduits formant éjecteurs, ménagés selon un plan horizontal dans une paroi inférieure du bol délimitant ce compartiment, ces conduits étant inclinés par rapport à une direction radiale et situés dans un même plan horizontal.

De préférence, une extrémité intérieure d'entrée de chacun de ces conduits formant éjecteurs est alors placée en face de rainures de guidage de la phase relativement lourde, formées dans la cuve fixe et prolongeant radialement vers l'intérieur ledit canal de retour, alors que des passages de raccordement formés dans la paroi inférieure du bol retient une extrémité supérieure dudit passage annulaire à une extrémité extérieure de sortie de chacun des conduits formant éjecteurs.

Dans cet agencement, les conduits inclinés formant éjecteurs réalisent, en combinaison avec les rainures de guidage de la phase relativement lourde, le pompage des deux phases et leur mélange intime à la sortie des conduits inclinés.

De préférence, les conduits inclinés formant éjecteurs débouchent par leurs extrémités extérieures de sortie dans des rainures de guidage des phases relativement lourde et relativement légère, formées radialement dans ladite paroi inférieure du bol et dont une extrémité extérieure débouche dans le compartiment de séparation.

Afin d'éviter que la phase relativement lourde ne descende directement dans l'étage inférieur, les rainures de guidage de cette phase relativement lourde comprennent une partie orientée radialement, prolongée vers le haut, jusqu'en face desdits conduits inclinés formant éjecteurs par une partie orientée verticalement.

Pour faciliter l'écoulement de la phase relativement lourde lors de sa descente par gravité vers l'étage inférieur, le canal de retour de la phase relativement lourde de chaque étage est décalé angulairement d'une valeur donnée par rapport aux canaux de retour des étages adjacents.

Le montage et le démontage de l'extracteur centrifuge ainsi conçu peuvent être facilités en réalisant les bols des différents étages sous la forme de pièces séparées montées sur un arbre vertical commun et en réalisant le carter fixe sous la forme d'une pièce élémentaire par étage, ces pièces élémentaires étant assemblées entre elles de façon étanche.

On décrira maintenant, à titre d'exemple non limitatif, un mode de réalisation préféré de l'invention, en se référant aux dessins annexés, dans lesquels :
- la figure 1 est une vue de côté, en coupe longitudinale, illustrant de façon schématique un extracteur centrifuge à plusieurs étages superposés conforme à l'invention ;
- la figure 2 est une vue en coupe longitudinale comparable à la figure 1 illustrant à plus grande échelle l'un des étages de l'extracteur centrifuge selon l'invention ; et
- la figure 3 est une vue en coupe selon la ligne III-III de la figure 2.

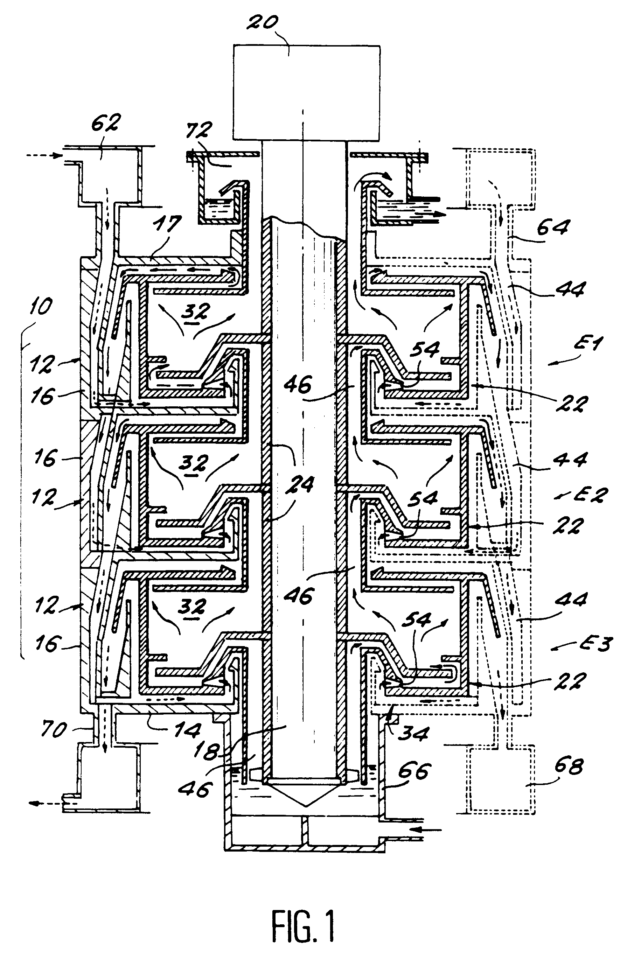

Comme l'illustre schématiquement la figure 1, l'extracteur centrifuge selon l'invention comprend un carter extérieur fixe 10, de forme généralement cylindrique, centré sur un axe vertical de la machine. Ce carter 10 comprend un certain nombre de pièces élémentaires 12 superposées, par exemple trois dans l'exemple représenté, qui sont assemblées entre elles de façon étanche par des moyens appropriés (non representés).

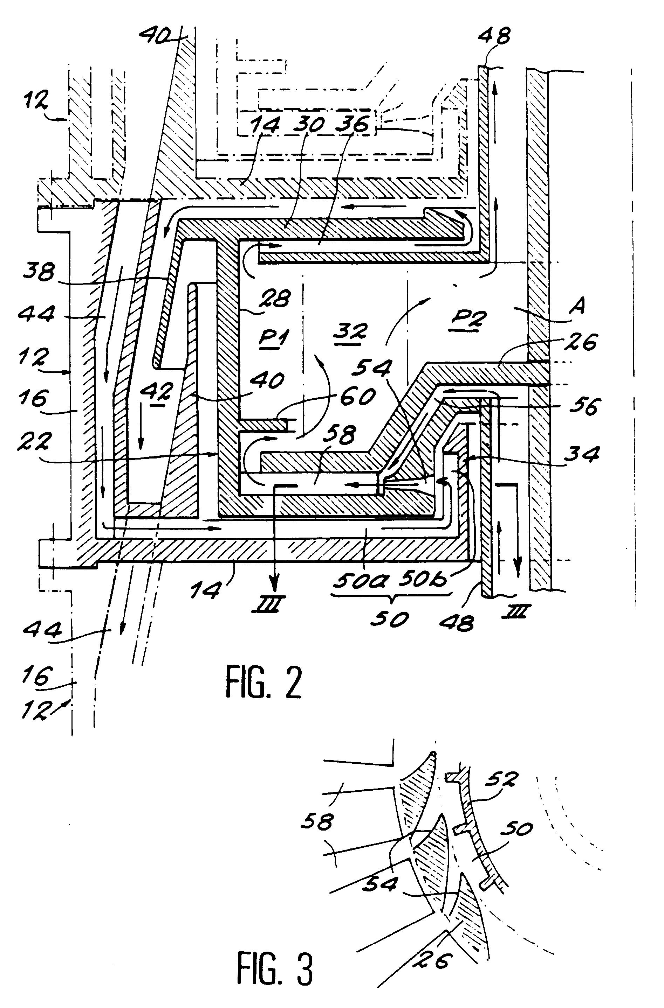

Les pièces élémentaires 12 sont toutes identiques et présentent généralement la forme de cuves cylindriques comportant un fond horizontal 14 (figure 2) et une paroi périphérique 16 en forme de cylindre. Sous l'effet de la superposition des différentes pièces élémentaires 12 lors de l'assemblage, le fond 14 de chacune d'entre elles forme un couvercle pour la cuve immédiatement inférieure. La pièce élémentaire 12 située à la partie supérieure de l'appareil est obturée par un couvercle 17.

Les pièces élémentaires 12 du carter fixe 10 délimitent à l'intérieur de ce dernier un certain nombre d'étages superposés (trois dans l'exemple illustré sur la figure 1) qui sont désignés par les références E1, E2 et E3 en partant du haut sur la figure 1.

L'extracteur centrifuge illustré de façon très schématique sur la figure 1 comprend de plus un ensemble apte à tourner à très grande vitesse à l'intérieur du carter 10, autour de l'axe vertical de ce dernier. Cet ensemble comprend un arbre d'entraînement vertical 18 qui traverse sur toute sa hauteur le carter fixe 10 et dont l'extrémité supérieure est entraînée en rotation à très grande vitesse par un moteur 20.

L'arbre 18 porte autant de bols 22 que l'extracteur comporte d'étages, c'est-à-dire trois dans l'exemple représenté. Chacun de ces bols 22 constitue une pièce séparée qui est placée à l'intérieur de l'une des pièces élémentaires 12 en forme de cuve du carter fixe 10. Par conséquent, chacun des étages E1 à E3 de l'extracteur centrifuge comporte un bol 22 apte à être entraîné en rotation à très grande vitesse par le moteur 20, au travers de l'arbre vertical 18.

Le montage des bols 22 sur l'arbre vertical 18 est assuré au moyen de manchons 24 formant entretoise, qui sont placés sur l'arbre 18. Le bord périphérique intérieur d'une paroi inférieure 26, en forme de disque (figure 2), de chacun des bols 22 est pincé entre deux manchons 24 adjacents.

Comme l'illustre plus précisément la figure 2, chacun des bols 22 comprend en outre une paroi extérieure cylindrique 28 et une paroi supérieure horizontale 30, également en forme de disque. La paroi inférieure 26 du bol 22 d'un étage donné est située immédiatement au-dessus du fond 14 de la pièce élémentaire 12 de cet étage et la paroi périphérique extérieure 28 est placée immédiatement à l'intérieur de la paroi périphérique 16 de la pièce élémentaire 12 de ce même étage. Enfin, la paroi supérieure 30 du bol 22 d'un étage donné est située immédiatement en dessous du fond 14 de la pièce élémentaire 12 de l'étage immédiatement supérieur, ou immédiatement en dessous du couvercle 17 pour l'étage E1.

Chacun des bols 22 de l'extracteur centrifuge délimite intérieurement, entre ses parois 26, 28 et 30, un compartiment de séparation 32 dans lequel des phases lourde et légère, non missibles, d'un liquide émulsionné introduit dans ce compartiment sont séparées par centrifugation. L'introduction de ce liquide se fait par le fond du compartiment de séparation 32, grâce à des moyens 34 pour mélanger et injecter les phases lourde et légère du liquide précité dans le fond du compartiment de séparation 32. Ces moyens 34, qui seront décrits plus en détail par la suite, sont formés en partie dans la paroi inférieure 26 du bol 22 et en partie dans le fond 14 de la pièce élémentaire 12 de l'étage correspondant.

A la base de chacun des étages de l'extracteur centrifuge, les moyens 34 permettent donc de mélanger un liquide relativement léger et un liquide relativement lourd, ou plutôt de réaliser une émulsion finement divisée de ces deux liquides non missibles, afin d'assurer le traitement de la phase lourde par la phase légère. Les moyens 34 permettent aussi de pomper l'émulsion ainsi réalisée pour la faire remonter dans le compartiment de séparation 32 du bol 22 correspondant.

Sous l'effet de la rotation à très grande vitesse du bol 22, les phases lourde et légère de l'émulsion injectée dans le compartiment de séparation 32 sont automatiquement séparées l'une de l'autre sous l'effet de la force centrifuge. La phase lourde P1 se retrouve ainsi à proximité de la paroi périphérique extérieure 28 du bol 22, alors que la phase légère P2 se retrouve à proximité du manchon 24 formant entretoise, dont elle est séparée par une couche d'air A.

Il est important de noter que la couche d'air A n'est en contact qu'avec des pièces ou des produits tournant à la même vitesse que le bol 22. Ainsi, la couche d'air A est en contact avec différentes parties du bol 22, avec le manchon 24 formant entretoise et avec la phase légère P2 qui tourne avec le bol. Par conséquent, la couche d'air A tend elle aussi à tourner avec le bol 22, de sorte qu'il ne se produit pratiquement pas de turbulence à l'intérieur du bol et que la séparation des deux phases du liquide sous l'effet de la force centrifuge est obtenue dans les meilleures conditions possibles.

La paroi supérieure 30 de chacun des bols 22 comporte dans son épaisseur des passages 36 qui sont orientés radialement par rapport à l'axe vertical de l'appareil. Chacun de ces passages 36 débouche par son extrémité extérieure dans une zone du compartiment de séparation 32 adjacente à la paroi extérieure cylindrique 28, de façon à former un passage périphérique de sortie de la phase lourde P1 qui se trouve dans cette zone.

L'extrémité intérieure de chacun des passages 36 débouche entre la paroi supérieure 30 et le fond 14 de la pièce élémentaire 12 de l'étage situé immédiatement au-dessus, autour d'une paroi tubulaire 48 qui fait saillie vers le haut à partir du bord intérieur de la paroi supérieure 30 du bol 22. La phase lourde P1 qui sort du compartiment de séparation 32 par les passages 36 chemine ensuite vers l'extérieur entre la paroi supérieure 30 et le fond 14 adjacent, comme l'illustrent les flèches sur la figure 2.

Lorsqu'elle vient heurter la paroi périphérique 16 de la pièce élémentaire 12 de l'étage correspondant, la phase lourde P1 redescend par gravité entre cette paroi 16 et un déflecteur tronconique 38 qui fait saillie vers le bas à partir du bord périphérique extérieur de la paroi supérieure 30 du bol 22. Le fond 14 de la pièce élémentaire 12 porte une virole 40 qui fait saillie vers le haut entre la paroi extérieure cylindrique 28 du bot 22 et le déflecteur 38, jusqu'à un niveau nettement supérieur à celui du bord inférieur du déflecteur 38. La chute par gravité de la phase lourde P1 se poursuit ensuite dans des passages 42, sensiblement verticaux, formés entre la paroi périphérique extérieure 16 et la viole 40.

Ces passages 42 sont prolongés vers le bas par des passages 44, sensiblement verticaux, formés dans la paroi périphérique 16 de la pièce élémentaire 12 de l'étage situé immédiatement en dessous du précédent. Un recyclage automatique de la phase lourde P1 d'un étage donné à l'entrée des moyens 34 de mélange et d'injection de l'étage immédiatement inférieur est ainsi réalisé.

En ce qui concerne la phase légère P2 qui se trouve séparée de la phase lourde P1 dans chacun des compartiments de séparation 32, elle sort de ce compartiment par un passage central de sortie 46, de forme annulaire, ménagé entre le manchon 24 monté sur l'arbre 18 et la paroi tubulaire 48 qui fait saillie vers le haut à partir du bord intérieur de la paroi supérieure 30 du bol 22 de l'étage considéré. En réalité, ce passage 46 contient essentiellement la couche d'air A et un film de la phase légère P2 qui remonte le long de la surface intérieure de la paroi tubulaire 48, sous l'effet de la force centrifuge.

La phase légère P2 issue d'un étage donné remonte ainsi jusqu'aux moyens 34 de mélange et d'injection de l'étage immédiatement supérieur.

Pour réaliser cet effet de mélange et d'injection des deux phases provenant des deux étages adjacents à un étage considéré, les moyens 34 présentent une structure particulière qui va à présent être décrite en détail en se référant aux figures 2 et 3.

La phase lourde P1 parvenue à l'extrémité inférieure de chacun des passages 44 prévus dans la paroi périphérique 16 de chacune des pièces élémentaires 12 du carter fixe 10 est ensuite acheminée radialement vers l'intérieur au-dessus du fond 14 de cette pièce élémentaire par des rainures de guidage 50. Ces rainures de guidage 50 sont ouvertes du côté de la paroi inférieure 26 du bol 22. Les rainures de guidage 50 comprennent une première partie 50a, orientée radialement par rapport à l'axe vertical de l'appareil. Cette première partie 50a est prolongée vers te haut par une deuxième partie 50b orientée verticalement, formée dans la surface extérieure d'une paroi tubulaire 52 prolongeant vers le haut le bord périphérique intérieur de la paroi inférieure 14 de la pièce élémentaire 12, autour de la paroi tubulaire 48. Cette deuxième partie 50b, orientée verticalement, des rainures de guidage 50 est fermée à son extrémité supérieure.

Pour lui permettre de contourner la paroi tubulaire 52, la paroi inférieure 26 de chacun des bols 22 comprend une partie centrale, plane et horizontale, par laquelle cette paroi 26 est fixée sur l'arbre 18, au-dessus du bord supérieur de la paroi tubulaire 52, une partie périphérique plane et horizontale adjacente au fond 14, et une partie intermédiaire tronconique liant la partie centrale haute et la partie périphérique basse. Il est à noter que la paroi tubulaire 48 de l'étage inférieur adjacent est raccordée par son bord supérieur sur la partie centrale de la paroi inférieure 26.

Des conduits 54, formant éjecteurs, sont ménagés dans la paroi inférieure 26 du bol 22, à la jonction de la partie périphérique plane et de la partie intermédiaire tronconique, en face des parties 50b orientées verticalement, des rainures de guidage 50. Ces conduits 54 sont incurvés et inclinés par rapport à une direction radiale et ils sont tous situés dans un même plan horizontal. Cette caractéristique leur permet, en combinaison avec les rainures de guidage 50, d'assurer l'injection ou le pompage de la phase lourde P1 depuis les rainures de guidage 50 vers le compartiment de séparation 32 de l'étage correspondant.

Les conduits 54 présentent par ailleurs une section qui va en diminuant depuis leur extrémité intérieure d'entrée située en face des parties 50b, orientées verticalement, des rainures de guidage 50 et leur extrémité extérieure de sortie. Cette caractéristique permet aux conduits inclinés 54 de remplir une fonction d'éjecteur vis-à-vis de la phase légère P2 en provenance de l'étage immédiatement inférieur de l'appareil. En effet, des passages de raccordement 56, ménagés dans l'épaisseur des parties centrale et intermédiaire de la paroi inférieure 26 du bol 22, font communiquer le passage central annulaire 46 de l'étage immédiatement inférieur avec l'extrémité extérieure de sortie de chacun des conduits 54 formant éjecteurs.

On réalise ainsi le pompage de la phase légère P2 et son mélange intime, sous forme d'émulsion, avec la phase lourde P1 admise par les conduits 54.

A la sortie des conduits 54 et des passages de raccordement 56, les deux liquides sont mélangés ou émulsionnés et acheminés vers le compartiment de séparation 32 par des rainures de guidage radiales divergentes 58 formées dans l'épaisseur de la partie périphérique de la paroi inférieure 26 du bol 22 correspondant. Ces rainures de guidage débouchent à leur extrémité extérieure dans le compartiment de séparation 32, en face d'un déflecteur horizontal 60, porté par la paroi cylindrique extérieure 28 du bol 22. Ce déflecteur 60 ramène automatiquement le mélange vers une région centrale du compartiment 32.

La phase lourde et la phase légère circulent ainsi à contre courant à l'intérieur de l'extracteur centrifuge entre les différents étages qui le constituent, ce qui a pour effet de réaliser progressivement te traitement de la phase lourde par la phase légère, ou l'inverse, grâce aux opérations de mélange puis de séparation réalisées successivement dans chacun des étages de l'extracteur.

Sur la figure 1, on a représenté en 62 un collecteur d'entrée de la phase lourde P1, placé à la partie supérieure de l'extracteur centrifuge et communiquant avec les canaux de retour 44 de l'étage supérieur E1 par des conduits verticaux 64 dans lesquels la phase lourde P1 s'écoule par gravité.

La phase légère P2 est introduite quant à elle à l'extrémité inférieure de l'appareil par un collecteur annulaire 66. Ce dernier débouche dans un passage annulaire inférieur 46 qui communique avec les moyens 34 de mélange et d'injection équipant l'étage inférieur E3 de l'appareil.

Inversement, la sortie de la phase lourde s'effectue à l'extrémité inférieure de l'appareil par un collecteur 68 dans lequel débouchent des conduits 70 prolongeant chacun des canaux de retour 44 de l'étage inférieur E3.

Enfin, la sortie de la phase légère s'effectue à la partie supérieure de l'extracteur centrifuge, au moyen d'un compartiment fixe de collecte 72 dans lequel débouche le passage annulaire 46 de l'étage supérieur E1.

Les canaux de retour 44 de la phase lourde d'un étage donné vers l'étage immédiatement inférieur sont décalés angulairement d'une valeur donnée par rapport aux canaux de retour 44 des étages immédiatement adjacents, afin que ces canaux puissent se croiser d'un étage à l'autre sans communiquer entre eux.

En plus de l'absence de turbulence dans les compartiments de séparation 32, l'extracteur centrifuge selon l'invention a pour avantage d'assurer la circulation de la phase lourde entre les étages par des canaux de retour 44 qui sont formés dans le carter fixe 10. Grâce à cet agencement, les risques de colmatage de ces canaux par les particules solides présentes dans la phase lourde sont très sensiblement réduits par rapport aux appareils dans lesquels la circulation de la phase lourde entre les différents étages s'effectue dans la partie tournante de l'extracteur. De plus, le nettoyage de l'appareil s'en trouve grandement simplifié en cas de colmatage.

Par ailleurs, la présentation de l'extracteur centrifuge sous forme modulaire facilite sa fabrication et son assemblage. De ce point de vue, l' étanchéité entre les pièces élémentaires 12 du carter fixe 10 peut être obtenue soit en plaçant des joints toriques entre chacun des éléments, soit en disposant l'ensemble du carter dans une enveloppe extérieure d'étanchéité.

Bien entendu, l'invention n'est pas limitée au mode de réalisation qui vient d'être décrit à titre d'exemple, mais en couvre toutes les variantes. En particulier, le nombre d'étages constituant l'extracteur centrifuge peut être différent de trois, sans sortir du cadre de l'invention.

## Revendications

1. Extracteur centrifuge comprenant un carter fixe (10), un arbre vertical (18) apte à entraîner en rotation à l'intérieur du carter un bol (22) délimitant intérieurement un compartiment de séparation (32), des moyens (34) pour mélanger et pour injecter dans le fond du compartiment de séparation une phase liquide relativement lourde et une phase liquide relativement légère, le bol comportant à son extrémité supérieure au moins un passage central (46) de sortie de la phase relativement légère et au moins un passage périphérique (36) de sortie de la phase relativement lourde, caractérisé par le fait que l'extracteur comprend plusieurs étages superposés (E1,E2,E3), comportant chacun un bol (22) apte à être entraîné en rotation par ledit arbre, le passage central (46) de chaque étage étant un passage annulaire formé entre ledit arbre (18) et une paroi tubulaire (48) solidaire du bol de cet étage, et communiquant avec les moyens (34) de mélange et d'injection d'un étage supérieur, alors que le passage périphérique (36) de chaque étage débouche dans un canal (42,44) de retour de la phase relativement lourde, formé dans le carter fixe et communiquant avec les moyens (34) de mélange et d'injection d'un étage inférieur.

2. Extracteur centrifuge selon la revendication 1, caractérisé par le fait que les moyens (34) de mélange et d'injection des phases relativement lourde et relativement légère dans chaque compartiment de séparation (32) comprennent des conduits (54) formant éjecteurs, ménagés dans une paroi inférieure du bol (22) délimitant ce compartiment, ces conduits (54) étant inclinés par rapport à une direction radiale et formés dans un plan horizontal.

3. Extracteur centrifuge selon la revendication 2, caractérisé par le fait qu'une extrémité intérieure d'entrée de chacun des conduits (54) formant éjecteurs est placée en face de rainures de guidage (50) de la phase relativement lourde, formées dans la cuve fixe (10) et prolongeant radialement vers l'intérieur ledit canal (44) de retour, alors que des passages de raccordement (56) formés dans la paroi inférieure du bol (22) relient une extrémité supérieure dudit passage annulaire (46) à une extrémité extérieure de sortie de chacun desdits conduits formant éjecteurs.

4. Extracteur centrifuge selon la revendication 3, caractérisé par le fait que les conduits (54) formant éjecteurs débouchent par leurs extrémités extérieures de sortie dans des rainures de guidage (58) des phases relativement lourde et relativement légère, formées radialement dans ladite paroi inférieure du bol (22) et dont une extrémité extérieure débouche dans le compartiment de séparation (32).

5. Extracteur centrifuge selon l'une quelconque des revendications 3 et 4, caractérisé par le fait que les rainures de guidage (50) de la phase relativement lourde comprennent une partie orientée radialement, prolongée vers le haut, jusqu'en face desdits conduits (54) formant éjecteurs, par une partie orientée verticalement.

6. Extracteur centrifuge selon l'une quelconque des revendications précédentes, caractérisé par le fait que le canal de retour (44) de la phase relativement lourde de chaque étage est décalé angulairement d'une valeur donnée par rapport aux canaux de retour des étages adjacents.

7. Extracteur centrifuge selon l'une quelconque des revendications précédentes, caractérisé par le fait que les bols (22) des différents étages sont des pièces séparées montées sur un arbre vertical commun (18).

8. Extracteur centrifuge selon la revendication 6, caractérisé par le fait que le carter fixe (10) comprend une pièce élémentaire (12) par étage, lesdites pièces élémentaires étant assemblées entre elles de façon étanche.

## Claims

1. Centrifugal extractor comprising a fixed casing (10), a vertical shaft (18) able to rotate within the casing a bowl (22) internally defining a separating compartment (32), means (34) for mixing and injecting into the bottom of the separating compartment a relatively heavy liquid phase and a relatively light liquid phase, the bowl having at its upper end at least one central passage (46) for the discharge of the relatively light phase and at least one peripheral passage (36) for the discharge of the relatively heavy phase, characterized in that the extractor comprises several superimposed stages (E1, E2, E3), each having a bowl (22) which can be rotated by the said shaft, the central passage (46) of each stage being an annular passage formed between said shaft (18) and a tubular wall (48) integral with the bowl of said stage and communicating with the mixing and injecting means (34) of an upper stage, whereas the peripheral passage (36) of each stage issues into a return channel (42, 44) for the relatively heavy phase formed in the fixed casing and communicating with the mixing and injecting means (34) of a lower stage.

2. Centrifugal extractor according to claim 1, characterized in that the mixing and injecting means (34) of the relatively heavy and relatively light phases in each separating compartment (32) comprise ducts (54) forming ejectors, positioned along a horizontal plane in a lower wall of the bowl (22) defining said compartment, said ducts (54) being inclined with respect to a radial direction and located in the same horizontal plane.

3. Centrifugal extractor according to claim 2, characterized in that a lower intake end of each of the said ducts (54) forming ejectors is then placed in front of guidance grooves (50) for the relatively heavy phase formed in the fixed vessel (10) and radially and inwardly extending said return channel (44), whereas the connecting passages (56) formed in the lower wall of the bowl (22) connect an upper end of said annular passage (46) to an outer discharge end of each of the ducts forming ejectors.

4. Centrifugal extractor according to claim 3, characterized in that the ducts (54) forming ejectors issue by their outer discharge ends into guidance grooves (58) of the relatively heavy and relatively light phases, which are radially formed in said lower wall of the bowl (22) and whereof an outer end issues into the separating compartment (32).

5. Centrifugal extractor according to either of the claims 3 and 4, characterized in that the guidance grooves (50) of the relatively heavy phase have a radially oriented part extended upwards to in front of the said ducts (54) forming ejectors by a vertically oriented part.

6. Centrifugal extractor according to any one of the preceding claims, characterized in that the return channel (44) for the relatively heavy phase of each stage is angularly displaced by a given value compared with the return channels of the adjacent stages.

7. Centrifugal extractor according to any one of the preceding claims, characterized in that the bowls (22) of the different stages are separate parts mounted on a common vertical shaft (18).

8. Centrifugal extractor according to claim 6, characterized in that the fixed casing (10) comprises one elementary part (12) per stage, said elementary parts being tightly assembled together.

## Patentansprüche

1. Zentifugalextraktor, umfassend ein festes Gehäuse (10), eine vertikale Welle (18) für den Rotationsantrieb eines Behälters (22) im Inneren des Gehäuses, der innen ein Trennabteil (32) abgrenzt, und Einrichtungen (34) zum Mischen und um in den Unterteil des Trennabteils eine relativ schwere Flüssigphase und eine relativ leichte Flüssigpase einzuleiten, wobei der Behälter an seinem oberen Ende wenigsten einen zentralen Durchlaß (46) für den Austritt der relativ leichten Phase aufweist und wenigstens einen peripheren Durchlaß (36) für den Austritt der relativ schweren Phase,
**dadurch gekennzeichnet**, daß der Extraktor mehrere übereinanderliegende Stufen (E1,E2,E3) umfaßt, von denen jede einen Behälter (22) aufweist, der in Drehung versetzt werden kann durch die genannte Welle, wobei der zentrale Durchlaß (46) jeder Stufe ein ringförmiger Durchlaß ist, ausgebildet zwischen der besagten Welle (18) und einer röhrenförmigen Wand (48), fest verbunden mit dem Behälter dieser Stufe, und verbunden mit den Einrichtungen (34) zum Mischen und Einleiten einer höheren Stufe, wohingegen der periphere Durchlaß (36) jeder Stufe in einem Rückführungskanal (42,44) der relativ schweren Phase mündet, ausgebildet in dem festen Gehäuse und verbunden mit den Misch- und Einleiteinrichtungen (34) einer tieferen Stufe.

2. Zentrifugalextraktor nach Anspruch 1, dadurch gekennzeichnet, daß die Misch- und Einleiteinrichtungen (34) der relativ schweren und relativ leichten Phasen in jedem Trennabteil (32) Leitungen (54) umfassen, die Ejektoren bilden, angebracht in einer Innenwand des dieses Abteil abgrenzenden Behälters (22), wobei diese Leitungen (54) geneigt sind in bezug auf eine radiale Richtung und ausgebildet in einer horizontalen Ebene.

3. Zentrifugalextraktor nach Anspruch 2, dadurch gekennzeichnet, daß ein inneres Eingangsende von jeder der ejektorenbildenden Leitungen (54) angebracht ist gegenüber Führungsrinnen (50) der relativ schweren Phase, ausgebildet in dem festen Gehäuse (10), die den genannten Rückführungskanal (44) radial nach innen verlängern, wohingegen die Verbindungsdurchlässe (56), ausgebildet in der unteren Wand des Behälters (22), ein oberes Ende des genannten ringförmigen Durchlasses (46) verbinden mit einem äußeren Austrittsende von jeder der genannten, ejektorenbildenden Leitungen.

4. Zentrifugalextraktor nach Anspruch 3, dadurch gekennzeichnet, daß die ejektorenbildenden Leitungen (54) mit ihren äußeren Austrittsenden in den Führungsrinnen (58) der relativ schweren und relativ leichten Phasen münden, die radial ausgebildet sind in der genannten unteren Wand des Behälters (22) und von denen ein äußeres Ende in dem Trennabteil (32) mündet.

5. Zentrifugalextraktor nach einem der Ansprüche 3 und 4, dadurch gekennzeichnet, daß die Führungsrinnen (50) der relativ schweren Phase einen radial ausgerichteten Teil umfassen, nach oben verlängert, bis vor die genannten ejektorenbildenden Leitungen (54), durch einen vertikal ausgerichteten Teil.

6. Zentrifugalextraktor nach einem der vorhergehenden Ansprüche, dadurch gekennzeichnet, daß der Rückführungskanal (44) der relativ schweren Phase jeder Stufe winkelmäßig versetzt ist um einen gegebenen Wert in bezug auf den Rückführungskanal der benachbarten Stufen.

7. Zentrifugalextraktor nach einem der vorhergehenden Ansprüche, dadurch gekennzeichnet, daß die Behälter (22) der verschiedenen Stufen getrennte, auf eine gemeinsame vertikale Welle (18) montierte Teile sind.

8. Zentrifugalextraktor nach Anspruch 6, dadurch gekennzeichnet, daß das feste Gehäuse (10) ein Elementarteil (12) pro Stufe enthält, wobei besagte Elementarteile auf dichte Weise zusammengebaut sind.
